# EUROPEAN PATENT SPECIFICATION

(11) **EP 3 923 032 B1**
(45) Date of publication and mention of the grant of the patent: **06.07.2022**
(21) Application number: 21178469.9
(22) Date of filing: 09.06.2021
(51) Int. Cl.: G01S 19/21, G01S 19/32

(54) **METHOD FOR DETECTING POTENTIAL TAMPERING WITH SATELLITE NAVIGATION SIGNALS AND/OR FOR DETERMINING A POSITION**
VERFAHREN ZUR DETEKTION VON POTENZIELLER MANIPULATION MIT SATELLITENNAVIGATIONSSIGNALEN UND/ODER ZUR BESTIMMUNG EINER POSITION
PROCÉDÉ DE DÉTECTION D'UNE ÉVENTUELLE ALTÉRATION DE SIGNAUX DE NAVIGATION PAR SATELLITE ET/OU DE DÉTERMINATION D'UNE POSITION

(30) Priority: 10.06.2020 NL 2025798
(43) Date of publication of application: 15.12.2021
(73) Proprietor: CGI Nederland B.V., 3068 AX Rotterdam (NL)
(72) Inventor: VROOM, Aram, 2635 CC DEN HOORN (NL); VAN DEN BERG, Axel Niels, 2224 DB KATWIJK (NL); VAN DEN OEVER, Thomas Daniël, 3067 VJ ROTTERDAM (NL); CIUBAN, Sebastian, 2274 TN VOORBURG (NL)
(74) Representative: Algemeen Octrooi- en Merkenbureau B.V.

(56) References cited:
- US-A1- 2012 121 087
- POZZOBON O ET AL: "Open GNSS Signal Authentication Based on the Galileo Commercial Service (CS)", GNSS 2013 - PROCEEDINGS OF THE 26TH INTERNATIONAL TECHNICAL MEETING OF THE SATELLITE DIVISION OF THE INSTITUTE OF NAVIGATION (ION GNSS+ 2013), THE INSTITUTE OF NAVIGATION, 8551 RIXLEW LANE SUITE 360 MANASSAS, VA 20109, USA, 20 September 2013 (2013-09-20), pages 2759-2768, XP056007574,
- LO S ET AL: "SIGNAL AUTHENTICATION - A SECURE CIVIL GNSS FOR TODAY", INSIDE GNSS, GIBBONS MEDIA, US, 1 September 2009 (2009-09-01), pages 30-39, XP002616381, ISSN: 1559-503X

## Description

### FIELD OF THE INVENTION

The present invention generally relates to a method for detecting potential tampering with satellite navigation signals.

### BACKGROUND OF THE INVENTION

Methods for detecting potential tampering with satellite navigation signals, and/or for determining a position, such as of a user, are known from the prior art.

WO 2014/193221 A1 for instance discloses a method for retrieving location data of an object over time in which the risk of unwanted spoofing is reduced. Received signals may be stored in a memory device and analyzed later on to detect potential tampering, therefore reducing the amount of required "real-time" (processing) power. However, this method requires decrypting navigation data from the snapshot. The snapshot therefore has to be of sufficient duration to be able to do so.

WO 2012/007720 A1 discloses a method for verifying a geo-location determination made at a receiver at a remote location by taking advantage of elements of location signals received at that receiver not detectable or alternatively decodable by the receiver. The elements are detectable by verification means at the remote location, from which a location determination of receiver can be verified. A problem with the aforementioned method, however, is that the receivers may need to fully process received signals (i.e. large amounts of data) in real-time, which requires a lot of (processing) power and bandwidth.

EP 2 682 785 A1 discloses a satellite navigation receiver comprising a receiver unit and a transmitter or a controller. The receiver unit is configured to receive and process a satellite navigation signal from a satellite navigation system at the certain time to obtain a received signal, comprising a first component in an encrypted digital form. The transmitter is configured to transmit the first component in the digital form together with an identification of a user of the satellite navigation receiver at the certain time. The controller is configured to store the first component in the digital form on a nonvolatile storage medium in association with other data representing an information from a location, at which the satellite navigation receiver was located at the certain time. However, the above method requires a lot of storage space on the storage medium. Furthermore, the above method only sends the first component in encrypted digital form to the server, which limits more advanced post-processing techniques and analysis of the second component in case of spoofing. Moreover, significant processing power is required on the user device in order to filter the data.

US 2012/121087 A1 and WO 2010/105136 A2 further disclose a system and method for detecting the spoofing of signals by processing intermittent bursts of encrypted GNSS signals in order to determine whether unencrypted signals are being spoofed.

The publication "Open GNSS Signal Authentication Based on the Galileo Commercial Service" by O. Pozzobon et al., GNSS 2013, PROCEEDINGS OF THE 26TH TECHNICAL MEETING OF THE SATELLITE DIVISION OF THE INSTITUTE OF NAVIGATION (ION GNSS+ 2013), THE INSTITUTE OF NAVIGATION, 8551 RIXLEW LANE SUITE 360 MANASSAS, VA 20109, USA, 20 September 2013, p. 2759 - 2768, XP056007574 further discloses an approach for GNSS authentication using the Galileo CS signal.

The publication "SIGNAL AUTHENTICATION - A SECURE CIVIL GNSS FOR TODAY" by S. Lo et al., INSIDE GNSS, GIBBONS MEDIA, US, 1 September 2009, pages 30-39, XP002616381, ISSN: 1559-503X further discloses a method for using hidden attributes cross-compared between two receivers to authenticate signals and the location solutions they generate.

### OBJECT OF THE INVENTION

It is therefore an object of the invention to provide a method for detecting potential tampering with a satellite navigation signal wherein a relatively fast indication can be obtained regarding the reliability of the received satellite navigation signals and wherein only a relatively minimal amount of (processing) power, storage space and bandwidth are required. It is a further object of the invention to provide position data/PNT data and fraud detection.

### SUMMARY OF THE INVENTION

According to the invention (which is defined by the claims), a method for detecting potential tampering with a satellite navigation signal is provided, characterized by comprising the steps of:
- providing input data from a signals-in-space snapshot receiver to a snapshot processing application, the input data comprising rough Position, Navigation and Timing (PNT) data and a snapshot of radiofrequency (RF) data of satellite navigation signals having a public signal component as well as an encrypted signal component, wherein the snapshot processing application is executed on a secure server,
- providing code parameters from the snapshot processing application to a code generation application comprising parameters to generate an appropriate spreading code, wherein the code generation application is executed on a secure server,
- providing a key to the code generation application and using the code generation application to provide a spreading code based on the key and the code parameters to the snapshot processing application to despread the encrypted signal component,
- using the snapshot processing application to compare the characteristics of the despread public signal component with the characteristics of the despread encrypted signal component, for instance based on comparison of correlation peaks, and
- using the snapshot processing application to provide output data, such as to a user, for instance via an interface, wherein the output data comprises an indication of whether the public signal component has potentially been tampered with, based on the comparison of the characteristics of the despread public signal component with the characteristics of the despread encrypted signal component.

The above method allows for relatively quick detection of potential tampering with the navigation signals, requiring minimal use of data storage space and bandwidth, due to only requiring a snapshot of relatively short duration. The navigation signals thus do not have to be decrypted. Only a spreading code is needed to despread the encrypted signal component. Thus, a relatively fast indication can be obtained regarding the reliability of the received satellite navigation signals, i.e. in particular if the public signal component has been tampered with, wherein only a relatively minimal amount of (processing) power, data storage and bandwidth are required. The method furthermore protects against "PNT fraud".

An embodiment relates to an aforementioned method, further comprising the steps of:
- comparing PNT data obtained with the public signal component with PNT data obtained with the encrypted signal component using satellite parameters, preferably ephemeris data, received from an external source, to further determine if the public signal component has been tampered with.

The above allows for an additional means of verifying if the public signal component has potentially been tampered with.

Therein, the rough PNT data can advantageously be used as an "initial guess", e.g. regarding the user's position.

The rough PNT data may be determined using a GNSS receiver, an internal clock, a default position or using any other suitable means.

An embodiment relates to an aforementioned method, wherein the output data comprises the (user's) position based on the PNT data obtained with the encrypted signal component using the satellite parameters received from the external source.

Thus, in addition to receiving an indication if the public signal has potentially been tampered with, e.g. the user also receives his actual, verified position, in particular in case tampering is detected.

An embodiment relates to an aforementioned method, wherein the snapshot has a duration long enough to compare the characteristics of the despread public signal component with the characteristics of the despread encrypted signal component (i.e. to allow despreading and comparison of correlation peaks).

The snapshot processing application is executed on a secure server to comply with regulations.

The code generation application is also executed on a secure server.

An embodiment relates to an aforementioned method, wherein the snapshot concerns a satellite navigation signal in an L band. However, it should be noted that the generic L band, or for instance the E6 band, can in principle also be used.

An embodiment relates to an aforementioned method, wherein the snapshot concerns a satellite navigation signal within a frequency range of -20 MHz up to and including +20 MHz around an L1 band's centre frequency. The Applicant has found that the signals present within this frequency range are often sufficient to determine potential tampering using the proposed method.

Preferably, the snapshot concerns a satellite navigation signal within a frequency range of -2 MHz up to and including +18 MHz around an L1 band's centre frequency. This frequency range in practice offers an optimal availability of signals (such as GPS, Galileo and military signals) to allow the use of very small snapshots (encrypted signals) to determine potential tampering, therefore saving storage space and bandwidth.

An embodiment relates to an aforementioned method, wherein the snapshot has a duration of 100 ms or less, such as less than 50 ms, less than 30 ms, or less than 20 ms, or less than 10 ms. In practice, such snapshot durations are more than sufficient to successfully use the proposed method for detecting potential tampering. By contrast, the (data decoding) methods employed by the prior art often need tens of seconds of data to determine potential tampering.

An embodiment relates to an aforementioned method, wherein the encrypted signal component originates from the Galileo Public Regulated Service (PRS) navigation service. The Galileo PRS by nature is encrypted and designed to be more robust, with anti-jamming and anti-spoofing mechanisms.

### BRIEF DESCRIPTION OF THE DRAWINGS

The invention will next be explained by means of the accompanying figure.

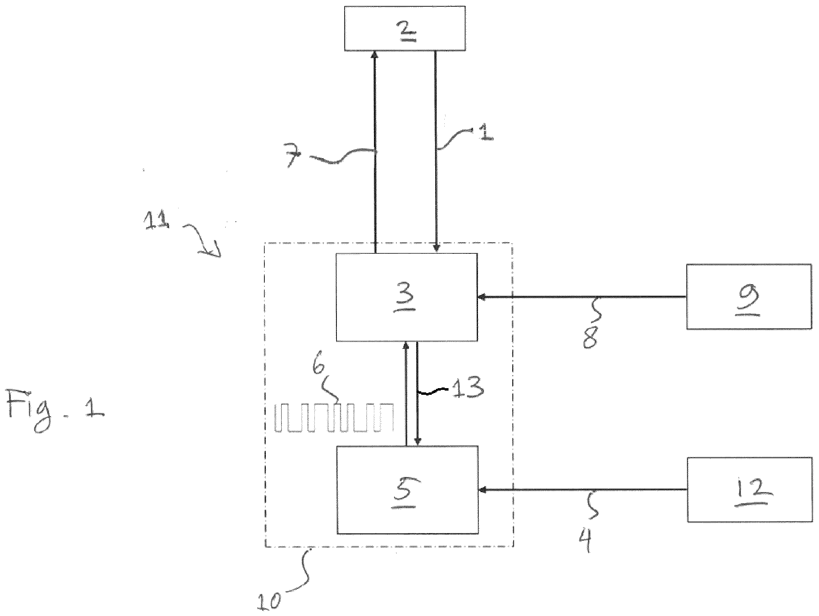

Figures 1 schematically shows an exemplary embodiment of the method according to the invention.

### DETAILED DESCRIPTION

Figure 1 shows an exemplary embodiment of a method 11 for detecting potential tampering with a satellite navigation signal. According to the invention, the method 11 may comprise the following steps.

Input data 1 is provided, such as through an interface 2, from a signals-in-space snapshot receiver, for example operated by a user, such as associated with a vessel, a car, et cetera. The input data 1 comprises rough Position, Navigation and Timing (PNT) data and a snapshot of radiofrequency (RF) data of a satellite navigation signal (such as originating from GPS, GLONASS, Beidou, et cetera) having a public signal component as well as an encrypted signal component.

The input data 1 is sent to a snapshot processing application 3. Code parameters 13 are provided to a code generation application 5 from the snapshot processing application 3, comprising parameters to generate an appropriate spreading code.

A key 4 is accessed (via an authorized entity 12) and provided to the (crypto-)code generation application 5. The code generation application 5 is used to provide (a) spreading code(s) 6 to the snapshot processing application 3 to despread the encrypted signal component, based on the key 4 and the code parameters 13 comprising the parameters to generate an appropriate spreading code.

The snapshot processing application 3 is then used to compare the characteristics of the despread public signal component with the characteristics of the despread encrypted signal component, for instance based on comparison of correlation peaks.

Thereafter, the snapshot processing application 3 may be used to provide output data 7, such as to a user, wherein the output data 7 comprises an indication of whether the public signal component has potentially been tampered with, based on the comparison of the characteristics of the despread public signal component with the characteristics of the despread encrypted signal component (such as based on the comparison of correlation peaks).

The PNT data obtained with the public signal component may be compared with PNT data obtained with the encrypted signal component using satellite parameters 8, preferably ephemeris data, received from an external source 9, to further determine if the public signal component has been tampered with. Therein, the rough PNT data provided by the user may be used as an "initial guess", i.e. an approximation. The rough PNT data may be determined using a GNSS receiver, an internal clock or a default position or using any other suitable means.

The output data 7 may e.g. comprise the user's position based on the PNT data obtained with the encrypted signal component using the satellite parameters 8 received from the external source 9.

The snapshot should have a duration long enough to compare the characteristics of the despread public signal component with the characteristics of the despread encrypted signal component. However, the snapshot can be much shorter than the time needed to e.g. decode data, as disclosed by the prior art. Therein, the snapshot may have a duration of 100 ms or less, such as less than 50 ms, less than 30 ms, or less than 20 ms, or less than 10 ms. The snapshot basically can have a variable duration ranging from milliseconds to seconds.

The snapshot processing application 3 is executed on a secure server 10. The same holds for the code generation application 5.

The snapshot may concern a satellite navigation signal in an L band, such as the L1 band, the E6 band or any other suitable band, as long as the required signals are sufficiently available within the respective band.

The snapshot preferably concerns a satellite navigation signal within a frequency range of -20 MHz up to and including +20 MHz around the L1 band's centre frequency, more preferably a satellite navigation signal within a frequency range of -2 MHz up to and including +18 MHz around the L1 band's centre frequency.

The encrypted signal component may originate from the Galileo Public Regulated Service (PRS) navigation service. PRS is intended to ensure better continuity of service to authorized users when access to other navigation services may be degraded and in cases of malicious interference, PRS increases the likelihood of the continuous availability of the signal-in-space.

### LIST OF REFERENCE NUMERALS

- 1.: Input data
- 2.: Interface
- 3.: Snapshot processing application
- 4.: Key
- 5.: Code generation application
- 6.: Spreading code
- 7.: Output data
- 8.: Satellite parameters
- 9.: External source
- 10.: Secure server
- 11.: Method
- 12.: Authorized entity
- 13.: Code parameters

## Claims

1. Method (11) for detecting potential tampering with a satellite navigation signal, **characterized by** comprising the steps of
- providing input data (1) from a signals-in-space snapshot receiver to a snapshot processing application (3), the input data comprising rough Position, Navigation and Timing (PNT) data and a snapshot of radiofrequency (RF) data of a satellite navigation signal having a public signal component as well as an encrypted signal component, wherein the snapshot processing application is executed on a secure server (10),
- providing code parameters (13) from the snapshot processing application (3) to a code generation application (5) comprising parameters to generate an appropriate spreading code, wherein the code generation application (5) is executed on a secure server (10),
- providing a key (4) to the code generation application (5) and using the code generation application to provide a spreading code (6) to the snapshot processing application based on the key and the code parameters to despread the encrypted signal component,
- using the snapshot processing application to compare the characteristics of the despread public signal component with the characteristics of the despread encrypted signal component, for instance based on comparison of correlation peaks, and
- using the snapshot processing application to provide output data (7), wherein the output data comprises an indication of whether the public signal component has potentially been tampered with, based on the comparison of the characteristics of the despread public signal component with the characteristics of the despread encrypted signal component.

2. Method (11) according to claim 1, further comprising the steps of:
- comparing PNT data obtained with the public signal component with PNT data obtained with the encrypted signal component using satellite parameters (8), preferably ephemeris data, received from an external source (9), to further determine if the public signal component has been tampered with.

3. Method (11) according to claim 2, wherein the rough PNT data is used as an initial guess.

4. Method (11) according to claim 2 or 3, wherein the output data (7) further comprises a position based on the PNT data obtained with the encrypted signal component using the satellite parameters (8) received from the external source (9).

5. Method (11) according to any one of the preceding claims, wherein the snapshot has a duration long enough to compare the characteristics of the despread public signal component with the characteristics of the despread encrypted signal component.

6. Method (11) according to any one of the preceding claims, wherein the snapshot concerns a satellite navigation signal in an L band.

7. Method (11) according to claim 6, wherein the snapshot concerns a satellite navigation signal within a frequency range of -20 MHz up to and including +20 MHz around an L1 band's centre frequency.

8. Method (11) according to claim 6 or 7, wherein the snapshot concerns a satellite navigation signal within a frequency range of -2 MHz up to and including +18 MHz around an L1 band's centre frequency.

9. Method (11) according to any one of the preceding claims, wherein the snapshot has a duration of 100 ms or less, such as less than 50 ms, less than 30 ms, or less than 20 ms, or less than 10 ms.

10. Method (11) according to any one of the preceding claims, wherein the encrypted signal component originates from the Galileo Public Regulated Service (PRS) navigation service.

## Patentansprüche

1. Verfahren (11) zum Detektieren einer potentiellen Manipulation eines Satellitennavigationssignals, **dadurch gekennzeichnet, dass** es die folgenden Schritte umfasst:
- Bereitstellen von Eingangsdaten (1) von einem Signale-im-Raum-Schnappschuss-Empfänger für eine Schnappschuss-Verarbeitungsanwendung (3), wobei die Eingangsdaten grobe Positions-, Navigations- und Timing- bzw. PNT-Daten und einen Schnappschuss von Hochfrequenz- bzw. HF-Daten eines Satellitennavigationssignals umfassen, das eine öffentliche Signalkomponente sowie eine verschlüsselte Signalkomponente aufweist, wobei die Schnappschuss-Verarbeitungsanwendung auf einem sicheren Server (10) ausgeführt wird,
- Bereitstellen von Codeparametern (13) von der Schnappschuss-Verarbeitungsanwendung (3) für eine Codeerzeugungsanwendung (5), die Parameter zur Erzeugung eines geeigneten Spreizcodes umfassen, wobei die Codeerzeugungsanwendung (5) auf einem sicheren Server (10) ausgeführt wird,
- Bereitstellen eines Schlüssels (4) für die Codeerzeugungsanwendung (5) und Verwenden der Codeerzeugungsanwendung zur Bereitstellung eines Spreizcodes (6) für die Schnappschuss-Verarbeitungsanwendung auf der Basis des Schlüssels und der Codeparameter zum Entspreizen der verschlüsselten Signalkomponente,
- Verwenden der Schnappschuss-Verarbeitungsanwendung zum Vergleichen der Eigenschaften der entspreizten öffentlichen Signalkomponente mit den Eigenschaften der entspreizten verschlüsselten Signalkomponente, etwa auf der Basis eines Vergleichs von Korrelationsspitzen, und
- Verwenden der Schnappschuss-Verarbeitungsanwendung zur Bereitstellung von Ausgangsdaten (7), wobei die Ausgangsdaten eine Angabe umfassen, ob die öffentliche Signalkomponente potentiell manipuliert wurde, auf der Basis des Vergleichs der Eigenschaften der entspreizten öffentlichen Signalkomponente mit den Eigenschaften der entspreizten verschlüsselten Signalkomponente.

2. Verfahren (11) nach Anspruch 1, das ferner die folgenden Schritte umfasst:
- Vergleichen von mit der öffentlichen Signalkomponente erhaltenen PNT-Daten mit mit der verschlüsselten Signalkomponente erhaltenen PNT-Daten unter Verwendung von Satellitenparametern (8), vorzugsweise Ephemeris-Daten, die von einer externen Quelle (9) empfangen werden, um ferner zu bestimmen, ob die öffentliche Signalkomponente manipuliert wurde.

3. Verfahren (11) nach Anspruch 2, wobei die groben PNT-Daten als eine erste Schätzung verwendet werden.

4. Verfahren (11) nach Anspruch 2 oder 3, wobei die Ausgangsdaten (7) ferner eine Position auf der Basis der PNT-Daten umfassen, die mit der verschlüsselten Signalkomponente unter Verwendung der von der externen Quelle (9) empfangenen Satellitenparameter (8) erhalten wird.

5. Verfahren (11) nach einem der vorhergehenden Ansprüche, wobei der Schnappschuss eine Dauer aufweist, die lange genug ist, um die Eigenschaften der entspreizten öffentlichen Signalkomponente mit den Eigenschaften der entspreizten verschlüsselten Signalkomponente zu vergleichen.

6. Verfahren (11) nach einem der vorhergehenden Ansprüche, wobei der Schnappschuss ein Satellitennavigationssignal in einem L-Band betrifft.

7. Verfahren (11) nach Anspruch 6, wobei der Schnappschuss ein Satellitennavigationssignal mit einem Frequenzbereich von -20 MHz bis zu einschließlich +20 MHz um die Mittenfrequenz eines L1-Bands betrifft.

8. Verfahren (11) nach Anspruch 6 oder 7, wobei der Schnappschuss ein Satellitennavigationssignal mit einem Frequenzbereich von -2 MHz bis zu einschließlich +18 MHz um die Mittenfrequenz eines L1-Bands betrifft.

9. Verfahren (11) nach einem der vorhergehenden Ansprüche, wobei der Schnappschuss eine Dauer von 100 ms oder weniger aufweist, wie etwa weniger als 50 ms, weniger als 30 ms oder weniger als 20 ms oder weniger als 10 ms.

10. Verfahren (11) nach einem der vorhergehenden Ansprüche, wobei die verschlüsselte Signalkomponente aus dem Navigationsdienst Galileo Public Regulated Service (PRS) stammt.

## Revendications

1. Procédé (11) de détection d'une éventuelle altération d'un signal de navigation par satellite, **caractérisé en ce qu'**il comprend les étapes de
- fourniture de données d'entrée (1) à partir d'un récepteur d'instantanés de signaux dans l'espace à une application de traitement d'instantanés (3), les données d'entrée comprenant des données approximatives de Position, de Navigation et de Synchronisation (PNT) et des données d'instantané de radiofréquence (RF) d'un signal de navigation par satellite ayant une composante de signal public ainsi qu'une composante de signal crypté, dans lequel l'application de traitement d'instantanés est exécutée sur un serveur sécurisé (10),
- fourniture de paramètres de code (13) à partir de l'application de traitement d'instantanés (3) à une application de génération de codes (5) comprenant des paramètres pour générer un code d'étalement approprié, dans lequel l'application de génération de codes (5) est exécutée sur un serveur sécurisé (10),
- fourniture d'une clé (4) à l'application de génération de codes (5) et utilisation de l'application de génération de codes pour fournir un code d'étalement (6) à l'application de traitement d'instantanés sur la base de la clé et des paramètres de code pour désétaler la composante de signal crypté,
- utilisation de l'application de traitement d'instantanés pour comparer les caractéristiques de la composante de signal public désétalée aux caractéristiques de la composante de signal crypté désétalée, par exemple sur la base de la comparaison des pics de corrélation, et
- utilisation de l'application de traitement d'instantanés pour fournir des données de sortie (7), dans lequel les données de sortie comprennent une indication permettant de savoir si la composante de signal public a potentiellement été altérée, sur la base de la comparaison des caractéristiques de la composante de signal public désétalée avec les caractéristiques de la composante de signal crypté désétalée.

2. Procédé (11) selon la revendication 1, comprenant en outre les étapes de :
- comparaison des données PNT obtenues avec la composante de signal public avec les données PNT obtenues avec la composante de signal crypté en utilisant des paramètres de satellite (8), de préférence des données d'éphéméride, reçus d'une source externe (9), pour déterminer en outre si la composante de signal public a été altérée.

3. Procédé (11) selon la revendication 2, dans lequel les données PNT approximatives sont utilisées comme estimation initiale.

4. Procédé (11) selon la revendication 2 ou 3, dans lequel les données de sortie (7) comprennent en outre une position basée sur les données PNT obtenues avec la composante de signal crypté en utilisant les paramètres de satellite (8) reçus de la source externe (9).

5. Procédé (11) selon l'une quelconque des revendications précédentes, dans lequel l'instantané a une durée suffisamment longue pour comparer les caractéristiques de la composante de signal public désétalée aux caractéristiques de la composante de signal crypté désétalée.

6. Procédé (11) selon l'une quelconque des revendications précédentes, dans lequel l'instantané concerne un signal de navigation par satellite en bande L.

7. Procédé (11) selon la revendication 6, dans lequel l'instantané concerne un signal de navigation par satellite dans une gamme de fréquences allant de -20 MHz jusqu'à +20 MHz inclus autour d'une fréquence centrale d'une bande L1.

8. Procédé (11) selon la revendication 6 ou 7, dans lequel l'instantané concerne un signal de navigation par satellite dans une gamme de fréquences allant de -2 MHz jusqu'à +18 MHz inclus autour d'une fréquence centrale d'une bande L1.

9. Procédé (11) selon l'une quelconque des revendications précédentes, dans lequel l'instantané a une durée inférieure ou égale à 100 ms, par exemple inférieure à 50 ms, inférieure à 30 ms, ou inférieure à 20 ms, ou inférieure à 10 ms.

10. Procédé (11) selon l'une quelconque des revendications précédentes, dans lequel la composante de signal crypté provient du service de navigation Galileo Public Regulated Service (PRS).
